# EUROPEAN PATENT APPLICATION

(11) **EP 4 843 816 A1**
(43) Date of publication of application: **25.11.2026**
(21) Application number: 25177323.0
(22) Date of filing: 19.05.2025
(51) Int. Cl.: B60L 7/10, B60L 15/20, B60L 50/75, B60L 58/15, B60L 58/40, B60W 40/076

(54) **MANAGEMENT OF EXCESS ENERGY OR POWER GENERATED BY A VEHICLE**

(71) Applicant: Volvo Truck Corporation, 405 08 Göteborg (SE)
(72) Inventor: GELSO, Esteban, VÄSTRA FRÖLUNDA (SE)
(74) Representative: Ström & Gulliksson AB

(57) **Abstract**

A computer system (160, 210, 500) for managing excess energy/power (206a, 206b) generated by a vehicle (100), the computer system (160, 210, 500) comprising processing circuitry (165, 502) configured to: determine an excess energy/power (206a, 206b) based on an amount of energy/power generated (225a, 225b) by the vehicle (100), an amount of energy/power required (235a, 235b) by the vehicle (100), and a power limit (250) or remaining storage capacity (245) of an energy storage system "ESS" (140, 240) of the vehicle (100); acquire a timeframe (260a) for increasing losses of two or more components and/or subsystems (255) of the vehicle (100); and determine a control action (265) for managing the excess energy/power (206a, 206b) by increasing losses of at least one of the two or more components and/or subsystems (255) based on the acquired timeframe (260a). The disclosure also relates to methods (400, 410) for managing excess power and excess energy and a vehicle (100) comprising the computer system (160, 210, 500).

## Description

### TECHNICAL FIELD

The disclosure relates generally to vehicle power management. In particular aspects, the disclosure relates to management of excess energy or power generated by a vehicle. The disclosure can be applied to heavy-duty vehicles, such as trucks, buses, and construction equipment, among other vehicle types. In particular, the disclosure can be applied in electrical vehicles.

### BACKGROUND

Excess energy generation in a vehicle occurs when the energy generated by the vehicle exceeds the energy required for operation of the vehicle and the remaining storage capacity of the vehicle energy storage system. When instantaneous values are considered, excess energy generation can be expressed as excess power generation, where the power generated by the vehicle exceeds the power required for operation of the vehicle and a power limit of the vehicle power energy system. This may occur for example during extended periods of regenerative braking or during operation of a fuel cell vehicle. Continuous overcharging of the battery can cause degradation of the battery health. Consequently, there is a need to manage the excess energy and power. Current solutions include using brake resistors to dissipate excess power, limiting the operation of some vehicle configurations based on vehicle load and topography, and using advanced predictive functionalities to avoid scenarios resulting in excess energy/power being generated. These solutions require additional hardware or limit the performance and operation of the vehicle.

It is therefore desired to develop a solution for managing generated excess energy/power that addresses or at least mitigates some of these issues.

### SUMMARY

This disclosure provides systems, methods and other approaches for managing excess energy or power generated by a vehicle. For each quantity, the excess is determined based on an amount generated by the vehicle, an amount required by the vehicle, and a capability of an energy storage system of the vehicle. In particular, the excess constitutes energy/power that cannot be used or stored by the vehicle. To handle this, a control action for managing the excess by increasing losses of the vehicle is determined. The control action comprises controlling at least one component and/or subsystem of the vehicle to increase losses by an amount corresponding to the excess, based on a timeframe for increasing losses of different components and/or subsystems. In this way, the systems and methods of the disclosure reduces the risk of overcharging the battery, while eliminating the need for additional hardware to dissipate excess energy/power. Further, the disclosure enables a particular component and/or subsystem to be controlled to increase losses depending on what is most appropriate for the current situation. In this way, efficient energy and power management is provided.

According to a first aspect of the disclosure, there is provided a computer system for managing excess power generated by a vehicle, the computer system comprising processing circuitry configured to: determine an excess power based on an amount of power generated by the vehicle, an amount of power required by the vehicle, and a power limit of an energy storage system "ESS" of the vehicle; acquire a timeframe for increasing power losses of two or more components and/or subsystems of the vehicle; and determine a control action for managing the excess power by increasing power losses of at least one of the two or more components and/or subsystems based on the acquired timeframe.

The first aspect of the disclosure may seek to provide a computer system for managing excess power generated by a vehicle, by determining a control action for increasing power losses of at least one component and/or subsystem of the vehicle. The control action is based on a timeframe of two or more components and/or subsystems. A technical benefit may include that the need for additional hardware to dissipate excess power is eliminated, as the systems makes use of the capability of existing vehicle components and/or subsystems to increase power losses and thereby reduce the excess power. Further, by taking the timeframe of the vehicle components and/or subsystems to increase power losses into consideration, the computer system is enabled to prioritize between different potential control actions such that an appropriate control action for the current situation may be determined, e.g. how to dissipate excess power as soon as possible. In this way, controlled power management is provided while preventing unnecessary wear on components and maintaining overall energy efficiency and stability of the vehicle.

Optionally in some examples, including in at least one preferred example, the power required by the vehicle comprises power to fulfil a motion request and/or power for one or more auxiliary systems of the vehicle. A technical benefit may include that the system ensures that the power required for operation of the vehicle and its auxiliary systems is accounted for when determining the control action to increase power losses.

Optionally in some examples, including in at least one preferred example, the power limit of the ESS is determined based on one or more of a remaining storage capacity, a state of charge rate limit, or a state of energy rate limit of the EES. A technical benefit may include that safe operation and optimized performance of the ESS is ensured.

Optionally in some examples, including in at least one preferred example, the processing circuitry is configured to determine the excess power by: determining a residual power based on a difference between the power generated by the vehicle and the power required by the vehicle; acquiring the power limit of the ESS of the vehicle; and determining the excess power based on a difference between the residual power and the power limit. A technical benefit may include that a balance between the power generated by the vehicle, the power required by the vehicle and the power limit of the ESS is obtained, such that the system is not controlled to increase power losses more than necessary while overcharging of the ESS is prevented.

According to a second aspect of the disclosure, there is provided a computer system for managing excess energy generated by a vehicle, the computer system comprising processing circuitry configured to: determine an excess energy based on an amount of energy generated by the vehicle, an amount of energy required by the vehicle, and a remaining storage capacity of an energy storage system "ESS" of the vehicle; acquire a timeframe for increasing energy losses of two or more components and/or subsystems of the vehicle; and determine a control action for managing the excess energy by increasing energy losses of at least one of the two or more components and/or subsystems based on the acquired timeframe.

The second aspect of the disclosure may seek to provide a computer system for managing excess energy generated by a vehicle, by determining a control action for increasing energy losses of at least one component and/or subsystem of the vehicle. A technical benefit may include that the need for additional hardware to dissipate excess energy is eliminated by making use of the capability of existing vehicle components and/or subsystems to increase energy losses and thereby reduce the excess energy. The computer system further enables prioritization between different potential control actions such that a controlled energy management and a maintained overall energy efficiency and stability of the vehicle is obtained.

Optionally in some examples, including in at least one preferred example, the energy required by the vehicle comprises energy to fulfil a motion request and/or energy for one or more auxiliary systems of the vehicle. A technical benefit may include that the system ensures that the energy required for operation of the vehicle and its auxiliary systems is accounted for when determining the control action to increase energy losses.

Optionally in some examples, including in at least one preferred example, the storage capacity of the ESS is determined based on one or more of a temperature, a terminal voltage, a state of charge, a state of energy, a state of health, and a maximum current of the ESS. A technical benefit may include that safe operation and optimized performance of the ESS is ensured.

Optionally in some examples, including in at least one preferred example, the processing circuitry is configured to determine the excess energy by: determining a residual energy based on a difference between the energy generated by the vehicle and the energy required by the vehicle; acquiring the remaining storage capacity of the ESS of the vehicle; and determining the excess energy based on a difference between the residual energy and the remaining storage capacity. A technical benefit may include that a balance between the energy generated by the vehicle, the energy required by the vehicle and the remaining storage capacity of the ESS is obtained, such that the system is not controlled to increase energy losses more than necessary while overcharging of the ESS is prevented.

Optionally in some examples, including in at least one preferred example, one or more of the power and the energy generated by the vehicle is generated by at least one of a fuel cell and an electric motor operating as a generator during a braking operation. A technical benefit may include that the system enables excess power or energy due to a slow response of the fuel cell or due to extended regenerative braking to be managed, without requiring additional hardware such as brake dissipators.

Optionally in some examples, including in at least one preferred example, the timeframe for increasing losses is determined based on look-ahead information. A technical benefit may include improved vehicle efficiency and reduced wear of the vehicle components and/or subsystems, by determining control actions based on upcoming conditions.

Optionally in some examples, including in at least one preferred example, the processing circuitry is configured to determine the control action by solving an optimization problem comprising a plurality of terms corresponding to a plurality of control actions and a plurality of weights corresponding to each of the plurality of terms. A technical benefit may include that the system is enabled to determine the control action based on various factors and constraints, such that an improved overall vehicle operation is obtained.

Optionally in some examples, including in at least one preferred example, the processing circuitry is configured to solve the optimization problem based on an objective, wherein the objective comprises reducing the time for increasing losses and/or maintenance of vehicle stability. A technical benefit may include increased efficiency and/or safety of the vehicle, as the control action may be determined to increase the losses quickly and/or to ensure stability.

Optionally in some examples, including in at least one preferred example, the optimization problem is constrained by an upper limit for increasing losses. A technical benefit may include that the energy efficiency of the vehicle is increased.

Optionally in some examples, including in at least one preferred example, the processing circuitry is further configured to acquire a capability for increasing losses of each of the at least one component and/or subsystem, and wherein the control action is further determined based on the acquired capability. A technical benefit may include that by considering both the timeframe and the capability of each component/and or subsystem to increase losses, a more effective utilization of the components and/or subsystems is enabled, and an optimized management of excess power/energy is obtained.

Optionally in some examples, including in at least one preferred example, the control action comprises at least one of: modifying a torque or force allocation between electric machines of the vehicle to increase losses, selecting a gear to increase losses in transmission, decreasing tyre pressure to increase a rolling resistance of the vehicle, increasing an internal resistance of the ESS, and/or changing a switching frequency of a DC-DC converter to reduce the efficiency of the DC-DC converter. A technical benefit may include that losses may be increased using one or more existing vehicle components and/or subsystem, thereby eliminating the need for additional hardware. Further, the capabilities of two or more of the components and/or subsystems may be considered, such that the component and/or subsystem most suitable for the current situation may be controlled to increase losses.

According to a third aspect of the disclosure, there is provided a vehicle comprising the computer system of the first or second aspect. The third aspect of the disclosure may seek to provide a vehicle capable of determining a control action for increasing losses of at least one component and/or subsystem of the vehicle in order to manage excess power/energy generated by the vehicle, based on the timeframe of the vehicle components and/or subsystems to increase power/energy losses. A technical benefit may include that the need for additional hardware to dissipate excess power/energy is eliminated, as the vehicle makes use of existing components and/or subsystems to handle excess power/energy generation. Further, by taking the timeframe of two or more components and/or subsystems to increase losses into consideration, the vehicle may control the component and/or subsystem most suitable for the current situation to increase losses.

According to a fourth aspect of the disclosure, there is provided a computer-implemented method for managing excess power generated by a vehicle, the computer-implemented method comprising: determining, by processing circuitry of a computer system, an excess power based on an amount of power generated by the vehicle, an amount of power required by the vehicle, and power limit of an energy storage system of the vehicle; acquiring, by the processing circuitry, a timeframe for increasing power losses of two or more components and/or subsystems of the vehicle; and determining, by the processing circuitry, a control action for managing the excess power by increasing power losses of at least one of the two or more components and/or subsystems of the vehicle based on the acquired timeframe.

The fourth aspect of the disclosure may seek to provide a computer-implemented method for managing excess power generated by the vehicle, by determining a control action for increasing power losses of at least one component and/or subsystem of the vehicle. The control action is based on a timeframe of two or more components and/or subsystems. A technical benefit may include that the need for additional hardware to dissipate excess power is eliminated, as the method comprises determining a control action that makes use of the capability of existing vehicle components and/or subsystems to increase power losses and thereby reduce the excess power. Further, by taking the timeframe of the vehicle components and/or subsystems to increase power losses into consideration, the method enables prioritization between different potential control actions such that an appropriate control action for the current situation may be determined, e.g. how to dissipate excess power as soon as possible. In this way, controlled power management is provided while preventing unnecessary wear on components and maintaining overall energy efficiency and stability of the vehicle.

According to a fifth aspect of the disclosure, there is provided a computer-implemented method for managing excess energy generated by a vehicle, the computer-implemented method comprising: determining, by processing circuitry of a computer system, an excess energy based on an amount of energy generated by the vehicle, an amount of energy required by the vehicle, and a remaining storage capacity of an energy storage system of the vehicle; acquiring, by the processing circuitry, a timeframe for increasing energy losses of two or more components and/or subsystems of the vehicle; and determining, by the processing circuitry, a control action for managing the excess energy by increasing energy losses of at least one of the two or more components and/or subsystems of the vehicle based on the acquired timeframe.

The fifth aspect of the disclosure may seek to provide a computer-implemented method for managing excess energy generated by the vehicle, by determining a control action for increasing energy losses of at least one component and/or subsystem of the vehicle. The control action is based on a timeframe of two or more components and/or subsystems. A technical benefit may include that the need for additional hardware to dissipate excess energy is eliminated, as the method comprises determining a control action that makes use of the capability of existing vehicle components and/or subsystems to increase energy losses and thereby reduce the excess energy. Further, by taking the timeframe of the vehicle components and/or subsystems to increase energy losses into consideration, the method enables prioritization between different potential control actions such that an appropriate control action for the current situation may be determined, e.g. how to dissipate excess energy as soon as possible. In this way, controlled energy management is provided while preventing unnecessary wear on components and maintaining overall energy efficiency and stability of the vehicle.

According to a sixth aspect of the disclosure, there is provided a computer program product comprising program code for performing, when executed by the processing circuitry, the computer-implemented method of the fourth or fifth aspect. The sixth aspect of the disclosure may seek to enable new vehicles and/or legacy vehicles to be conveniently configured, by software installation/update, to manage excess power/energy generated by the vehicle by determining a control action for increasing losses of at least one component and/or subsystem of the vehicle, based on a timeframe of two or more vehicle components and/or subsystems to increase losses and thereby reduce the excess power/energy. A technical benefit may include that the need for additional hardware in the vehicle to dissipate excess power/energy is eliminated, and that the vehicle is enabled to prioritize between different potential control actions such that an appropriate control action for the current situation may be determined, e.g. how to dissipate excess power/energy as soon as possible.

According to a seventh aspect of the disclosure, there is provided a non-transitory computer-readable storage medium comprising instructions, which when executed by the processing circuitry, cause the processing circuitry to perform the computer-implemented method of the fourth or fifth aspect. The seventh aspect of the disclosure may seek to enable new vehicles and/or legacy vehicles to be conveniently configured, by software installation/update, to manage excess power/energy generated by the vehicle by determining a control action for increasing losses of at least one component and/or subsystem of the vehicle, based on a timeframe of two or more vehicle components and/or subsystems to increase losses and thereby reduce the excess power/energy. A technical benefit may include that the need for additional hardware in the vehicle to dissipate excess power/energy is eliminated, and that the vehicle is enabled to prioritize between different potential control actions such that an appropriate control action for the current situation may be determined, e.g. how to dissipate excess power/energy as soon as possible.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a side view of a vehicle according to an example.
**FIG. 2** schematically shows a control system for managing excess energy or power of a vehicle according to an example of the disclosure.
**FIG. 3a****-c** schematically shows different scenarios of energy management in a vehicle.
**FIG. 4a** is a flow chart of a computer-implemented method for managing excess energy according to an example.
**FIG. 4b** is a flow chart of a computer-implemented method for managing excess power according to an example.
**FIG. 5** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Excess energy generation in a vehicle occurs when the energy generated by the vehicle exceeds the energy required for operation of the vehicle and the remaining storage capacity of the vehicle energy storage system. When instantaneous values are considered, excess energy generation can be expressed as excess power generation This may occur for example during extended periods of regenerative braking, where kinetic energy is recovered and converted into electrical energy that is typically stored in an energy storage system (ESS) such as a battery, by operating an electric motor as a generator. However, in some situations, such as when a vehicle is descending a long slope and recovered kinetic energy increases due to the gravitational force as the vehicle moves downhill, the ESS may reach its maximum storage capacity and the recovered kinetic energy will result in an excess that may not be stored. Another situation which may lead to excess energy/power being generated is during operation of a fuel cell vehicle, FCEV. In FCEVs, the power generation is typically managed to meet an energy demand of the vehicle. However, fuel cells have a slow response to dynamic load changes and may consequently continue to generate power at a higher rate even when the vehicle power demand has decreased. This may result in that a power limit of the ESS of the FCEV is surpassed and that excess power is generated.

To remedy this, systems and methods are proposed for managing excess energy or power generated by a vehicle. For each quantity, the system is configured to determine an excess based on an amount generated by the vehicle, an amount power required by the vehicle, and a capability of an ESS of the vehicle. The system is further configured to acquire a time frame required by two or more components and/or subsystems of the vehicle to increase energy/power losses. Based on the timeframe of each component and/or subsystem, a control action for managing the excess by increasing losses of at least one of the components and/or subsystems may be determined. In this way, the systems and methods of the disclosure reduce the risk of overcharging the ESS while eliminating the need for additional hardware to dissipate excess energy/power. Further, the systems and methods allow a control action to be determined based on timeframes and capabilities of the vehicle components and/or subsystems to increase losses, such that an efficient energy and power management is ensured.

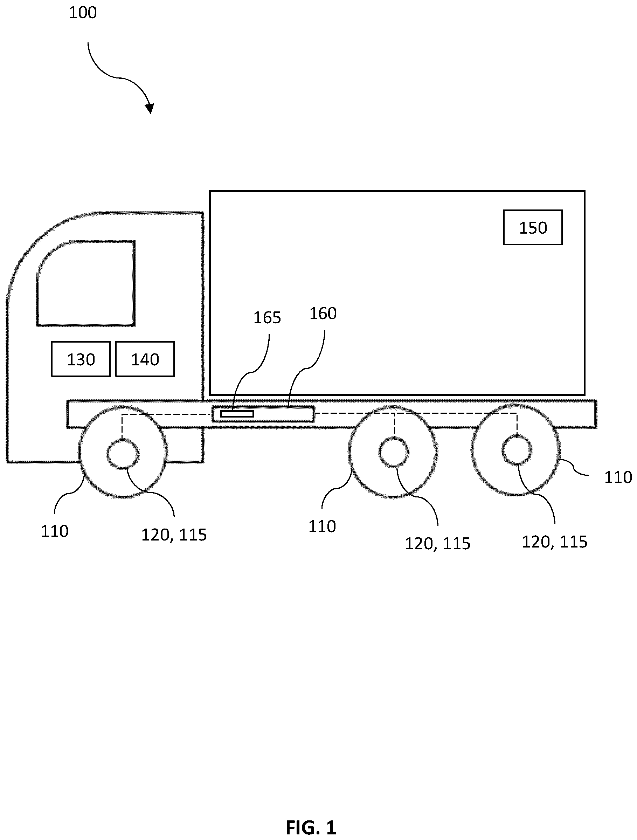

**FIG. 1** shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations.

The vehicle **100** comprises a number of axles, each generally having two or more wheels **110.** Whilst three axles are shown, it will be appreciated that any suitable number of axles may be provided. It will also be appreciated that any number of the axles may be driven axles. The vehicle **100** normally comprises a steered axle, or more than one steered axle.

The vehicle **100** comprises one or more sources of propulsion. For example, the vehicle **100** may comprise one or more electrical machines **120** such as electric motors and/or generators. The electrical machines **120** are configured to drive, e.g. provide torque and/or steering to, one or more axles or individual wheels **110** of the vehicle **100.** The electrical machines **120** can supply either a positive (propulsion) or negative (braking) force. The use of electrical machines **120** to supply a negative force is known as regenerative braking. The electrical machines **120** may operate with a peak power and/or continuous power, where the peak power may be available for short durations and may have an associated energy limitation. In some examples, the vehicle **100** may also include another source of propulsion, for example an internal combustion engine (ICE). The vehicle **100** also comprises a powertrain (not shown) configured to deliver mechanical power from the propulsion source (the electrical machines **120** or the ICE) to the wheels **110.**

Furthermore, the vehicle **100** may comprise one or more sets of service brakes **115.** The service brakes **115** can supply a negative (braking) force. The service brakes **115** may be, for example, frictional brakes such as pneumatic brakes. In some examples, the brakes may be electro-mechanical brakes.

When regenerative braking is engaged, the operation of the electrical machine **120** is reversed by a control unit, which causes the electrical machine **120** to operate as a generator. Instead of consuming electrical energy to drive the wheels, the motor converts the kinetic energy of the vehicle into electrical energy, which may be stored in an ESS **140,** and so regenerative braking by the electrical machines **120** may be generally preferred over using the service brakes **115.** The electrical machines **120,** service brakes **115,** and ICE of a vehicle **100** may be referred to as actuators or motion support devices (MSDs) of the vehicle **100.**

The ESS **140** of the vehicle **100** is a rechargeable energy storage system configured to store energy (e.g. electrical energy) and deliver energy/power to a variety of vehicle systems, such as the electrical machines **120** or auxiliary systems **150** of the vehicle **100,** for example HVAC, lighting, and power steering. For example, the ESS **140** may provide energy/power to the electrical machines **120,** and the electrical machines **120** convert this into mechanical torque to drive the wheels **110.** As discussed, the ESS **140** may also store energy generated by the electrical machines **120** operating as motors or generators. In some examples, the ESS **140** comprises at least one battery. In some examples, the vehicle **100** is a battery electric vehicle (BEV). In a BEV, the ESS **140** is the primary source of energy/power for operation of the vehicle **100.** The ESS **140** may be charged from external power sources or by energy recovered by the vehicle **100,** for example during regenerative braking as discussed above.

The ESS **140** may have an energy storage capacity, which may be influenced by the type and number of cells used, their chemical composition, physical size, and the system's energy density, as well as factors such as state of charge (SOC), state of energy (SOE), state of health (SOH), age, temperature, and the like. Since the storage capacity of the ESS **140** is limited, it can only store a limited amount of energy generated by the vehicle **100.** The ESS **140** may also have an effective energy storage capacity, which refers to the actual usable energy it can deliver under real-world conditions. The ESS **140** may also have a buffer to prevent overcharging, meaning that a full storage capacity is not reached.

Furthermore, the ESS **140** may be subject to one or more power limits relating to the power that can be sustained during charging or discharging. Such power limits may be influenced by a temperature, terminal voltage, SOC, SOC rate limit (i.e. energy divided by time) and/or SOE rate limit to charge the battery due to a thermal management issue, a potential overvoltage condition, or due to unbalanced cells in the pack, which can result in safety concerns and damage to the battery cells. Furthermore, such power limits may be influenced by the energy storage capacity of the ESS **140,** for example by reducing a charging power limit as the energy storage capacity decreases (or decreasing a discharging power limit as the energy storage capacity increases)

In some examples, the vehicle **100** is a fuel cell electric vehicle (FCEV). A FCEV comprises a fuel cell system **130** configured to power the electrical machines **120.** The fuel cell system **130** operates by converting chemical energy from hydrogen fuel stored in a hydrogen tank into electrical energy through an electrochemical reaction with oxygen. Typically, the fuel cell system **130** monitors the power demand of the vehicle **100** and adjust the output accordingly. An FCEV may comprise an ESS **140** that can deliver extra power when needed, or store excess electrical energy when needed. Since an FCEV does not primarily rely on stored electrical power for operation but is rather configured to continuously generate power from the hydrogen fuel, the power storage capacity of the ESS **140** of an FCEV may be reduced compared to the power storage capacity of the ESS **140** of a BEV.

As will be appreciated, the vehicle **100** can therefore be considered to comprise energy/power generators and energy/power consumers. The vehicle energy/power generators may comprise, for example, internal combustion engines, the fuel cell system **130** or regenerative braking by the electrical machines **120** as discussed above, configured to convert fuel, chemical energy or kinetic energy into electrical energy/power. As discussed above, the energy/power generators may generate an excess in certain scenarios. The vehicle energy/power consumers comprise for example the electrical machines **120** operating to propel the vehicle **100** any auxiliary systems **150** of the vehicle **100,** for example lighting systems, climate control systems and braking systems. The ESS **140** may be considered as a generator (or supplier), a consumer, both, or neither.

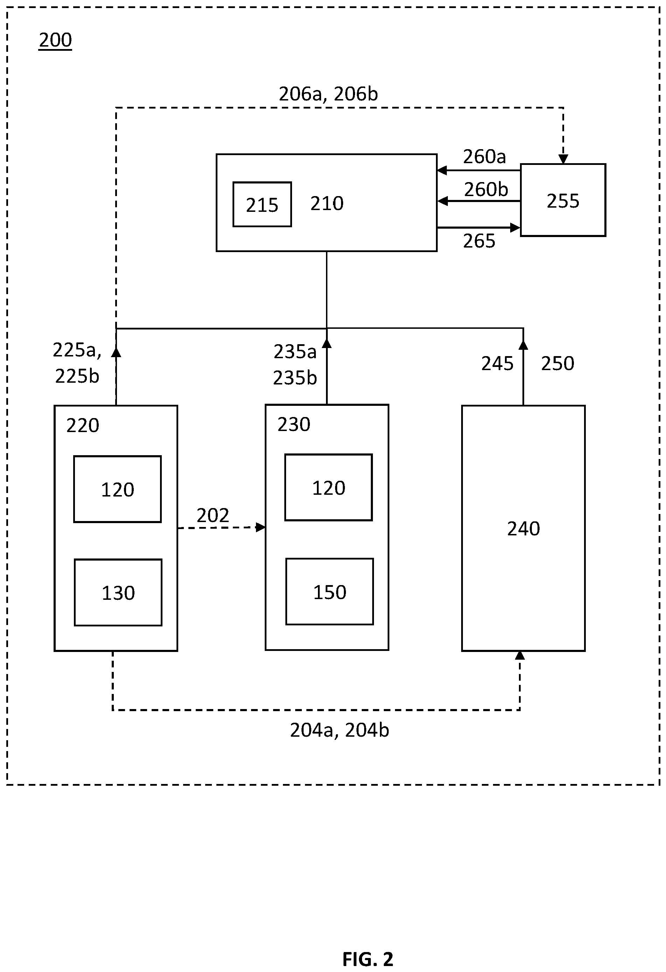

The vehicle **100** further comprises a controller in the form of a computer system **160** comprising processing circuitry **165.** The operation of the computer system **160** will be described in more detail in relation to **FIG. 2****.** The computer system **160** may be a vehicle control unit configured to perform various vehicle (unit) control functions, such as vehicle motion management and regulation of the flow of energy/power between the energy/power generators and energy/power consumers of the vehicle **100.** The computer system **160** may receive control signals from a remote system, implemented at a distance from the vehicle **100.** The computer system **160** may be communicatively coupled to the remote system in any suitable way, for example via a circuit or any other wired, wireless, or network connection known in the art. Furthermore, the communicative coupling may be implemented as a direct connection between the computer system **140** and the remote system or may be implemented as a connection via one or more intermediate entities.

The computer system **160** may also be coupled to or configured to implement an energy management function or energy manager. The energy manager may determine how a power demand is divided between the power consumers. The energy manager may also be configured as a power manger. For example, when a time horizon is considered, it may handle energy. When instantaneous values are considered, it may handle power.

The computer system **160** shown in **FIG. 1** is common for all electrical machines **120** of the vehicle **100,** however it will be appreciated that each electrical machine **120** and each auxiliary system **150** may have its own respective controller. In many cases, the computer system **160** may be implemented in the structure of the electrical machine **120** or auxiliary system **150** itself. The computer system **160** may be a microcontroller.

The vehicle **100** may be a vehicle combination comprising a number of units, including a tractor unit and at least one trailing unit. In some examples, the vehicle **100** may be a vehicle combination comprising a number of units, including a tractor unit and at least one trailing unit. In such examples, each unit may comprise its own electrical machines **110,** battery **120,** service brakes **115,** and the like. In examples where the vehicle **100** is a vehicle combination, the vehicle **100** may include a global controller and a plurality of unit controllers, for example a controller for each unit.

Excess energy or power generation may occur in a number of scenarios. One example is during extended periods of regenerative braking, where kinetic energy is recovered and converted into electrical energy by operating an electric motor as a generator. In some situations, such as when a vehicle is descending a long slope and recovered kinetic energy increases due to the gravitational force as the vehicle moves downhill, the ESS **140** may reach its maximum storage capacity, and the recovered kinetic energy will result in an excess that may not be stored. This may result in a relatively constant excess energy over a period. Another situation which may lead to excess energy or power being generated is during operation of an FCEV where, due to inherent electrochemical and mechanical delays associated with adjusting the operation of the fuel cell stack, the fuel cell system **130** has a slower dynamic response to changes in power demand compared to batteries or other power sources. As a result, if an FCEV suddenly accelerates or climbs a gradient requiring a quick increase in power, the fuel cell system **130** may not be able to ramp up its output instantaneously. Correspondingly, when the power demand suddenly drops, such as during deceleration or a transition to idle, the fuel cell system **130** will continue to generate power at the same rate for a brief period, since it cannot rapidly ramp down its output without potential degradation to the system, resulting in an excess energy/power.

**FIG. 2** schematically shows an example control system **200** of the vehicle **100** for managing excess energy/power generated by the vehicle **100.** The control system **200** comprises a controller **210,** for example computer system **160** discussed above, configured to manage the energy/power distribution and management in the vehicle **100.** To this end, the controller **210** is operatively connected to the vehicle energy/power generators **220,** the vehicle energy/power consumers **230,** and the ESS **240,** corresponding to ESS **140** discussed above.

The vehicle energy/power generators **220** comprise for example internal combustion engines, the electrical machines **120** operating as generators, and/or a fuel cell system **130** discussed above. These components or systems convert fuel or kinetic energy into usable energy/power for other systems and components of the vehicle **100.** The controller **210** is configured to determine an amount of energy **225a** generated by the vehicle **100** over a given period and/or an amount of power **225b** generated by the vehicle **100** at a given time instant. This energy/power may be generated for example by an electrical machine **120** during a braking operation and/or during operation of the fuel cell system **130.** At least a part of the generated energy **225a** or generated power **225b** is typically allocated to the vehicle energy/power consumers **230,** shown as arrow **202** in **FIG. 2****.**

The vehicle energy/power consumers **230** comprise for example the electrical machines **120** operating to drive one or more axles or wheels of the vehicle **100,** and/or at least one auxiliary system **150,** as discussed above. The controller **210** is configured to determine an amount of energy **235a** or power **235b** required by the energy/power consumers **230,** comprising the energy/power required by the electrical machines **120** to fulfil a motion request

(e.g. the energy/power required to provide the propulsion or braking force needed for the vehicle longitudinal acceleration or speed request, including the resistive forces such as aerodynamic drag, rolling resistance, and gradient resistance) and/or the energy/power required for operation of at least one auxiliary system **150.** The energy/power consumers **230** thus consume at least part of the energy **225a** or power **225b** generated by the energy/power generators **220.** In some scenarios, the energy **225a** or power **225b** generated by the vehicle energy/power generators **220** exceeds the energy **235a** or power **235b** required by the vehicle energy/power consumers **230.** This is defined as a residual energy **204a** or power **204b.** The residual energy is, when possible (e.g. dependent on a storage capacity and/or power limit), stored in the ESS **240** for future use, shown in **FIG. 2****.**

The ESS **240** of the vehicle **100** serves as an energy storage component, capable of storing electrical energy generated from the energy/power generators **210** or from other (e.g. external) sources for future use by the energy/power consumers **220.** The ESS **240** has a total storage capacity defined by its design specification and operating conditions, and a dynamic remaining storage capacity **245** which varies based on the extent to which the total capacity is utilized at a given moment. Furthermore, the ESS **240** may be subject to one or more power limits **250** relating to the power that can be sustained during charging or discharging. The controller **210** is configured to determine the remaining storage capacity **245** by monitoring parameters such as terminal voltages, SOC, SOE, SOH, temperature, and maximum current of the ESS **240,** and to manage charging and discharging cycles of the ESS **240** accordingly. In this way, the controller **210** prevents conditions such as overcharging, excessive discharging, or thermal stress and maintains the integrity and operational safety of the ESS **240.** The controller **210** is also configured to determine the to one or more power limits **250,** for example based on the remaining storage capacity **245,** a state of charge rate limit, or a state of energy rate limit.

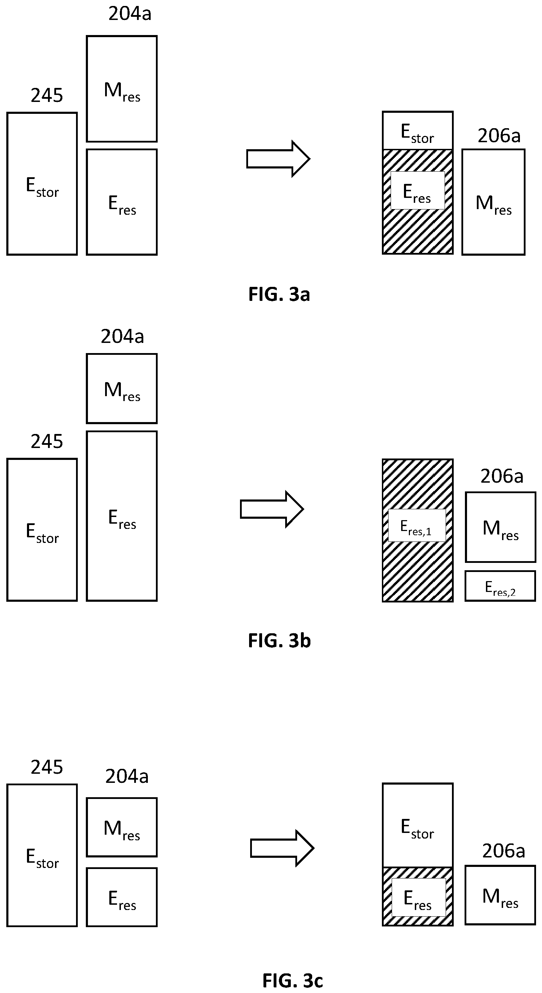

In certain operating scenarios, the energy **225a** being generated by the vehicle **100** exceeds both the immediate energy demand **235a** and the available storage capacity **245.** Similarly, in certain operating scenarios, the power **225b** being generated by the vehicle **100** exceeds both the immediate power demand **235b** and a power limit **250** relating to the power that can be sustained during charging the ESS **240.** As discussed, this may occur for example during prolonged regenerative braking or due to a slow response to dynamic load changes in a fuel cell system **130.** These scenarios will result in an excess energy **206a** and/or an excess power **206b** being generated by the vehicle **100.** The excess energy/power **206a, 206b** is defined as a difference between the residual energy/power **204a, 204b** and the energy/power that can be handled by the ESS **240** (i.e. based on the remaining storage capacity **245** or power limit **250).** Thus, the excess energy/power **206a, 206b** is energy/power that cannot be used by either the electrical machines **120** or the auxiliary systems **150** of the vehicle **100,** or be stored by the ESS **240** of vehicle **100.** To avoid overcharging the ESS **240** or needing additional hardware such as brake resistors to dissipate the power, the excess energy/power **206a, 206b** needs to be managed. How much of the residual energy/power **204a, 204b** that will be excess energy/power **206a, 206b** depends on if the residual energy/power **204a, 204b** is mechanical energy/power or electrical energy/power, the remaining storage capacity of the ESS **240,** and the power limit **250.** Different scenarios of managing energy/power generated by the vehicle **100** will be discussed further in relation to **FIG. 3a****-c.**

**FIG. 3a****-c** schematically show different scenarios of managing energy generated by the vehicle **100.** The vehicle **100** generates both mechanical and electrical energy. The mechanical energy may comprise kinetic and/or potential energy and is typically generated by components like the internal combustion engine or the electrical machines **120** during propulsion and drives the vehicle wheels through drivetrain components. The electrical energy is generated for example during regenerative braking or by the fuel cell system **130** and is used to drive the electrical machines **120,** auxiliary systems **150,** or to recharge the ESS **240.** In each of **FIG. 3a****-c,** a residual energy **204a** has been generated by the vehicle **100,** wherein the residual energy **204a** comprises both a mechanical residual energy component Mᵣₑₛ and an electrical residual energy component Eᵣₑₛ. The remaining storage capacity **245** of the ESS **240** of the vehicle **100** is represented by Eₛₜₒᵣ.

**FIG. 3a** shows a scenario where the residual energy **204a** exceeds the remaining storage capacity Eₛₜₒᵣ. However, the electrical residual energy component Eᵣₑₛ does not exceed the remaining storage capacity Eₛₜₒᵣ, and thus the entire electrical residual energy component Eᵣₑₛ may be stored in the ESS **240.** The residual mechanical energy component Mᵣₑₛ will be excess energy **206,** while some storage capacity of the ESS **240** remains.

**FIG. 3b** also shows a scenario wherein the residual energy **204a** exceeds the remaining storage capacity Eₛₜₒᵣ. In this scenario, the electrical residual energy component Eᵣₑₛ itself also exceeds the remaining storage capacity Eₛₜₒᵣ. Therefore, only a part E_{res,1} of the electrical residual energy component Eᵣₑₛ may be stored in the ESS **240.** The part E_{res,2} of the electrical residual energy component Eᵣₑₛ that exceeds the storage capacity of the ESS **240** will be excess energy **206** together with the residual mechanical energy component Mᵣₑₛ.

**FIG. 3c** shows a scenario wherein the residual energy **204a** does not exceed the remaining storage capacity Eₛₜₒᵣ. The electrical residual energy component Eᵣₑₛ may thus be stored in the ESS **240.** However, as the residual mechanical power component Mᵣₑₛ cannot be stored in an ESS **240** without the need for an additional component or subsystem, there will still be excess energy **206a,** while some storage capacity of the ESS **240** remains.

It will be appreciated that the scenarios shown in each of **FIG. 3a****-c** could equally be applied to power management, where the residual, mechanical, and electrical energies are residual, mechanical, and electrical powers, and a power limit **250** is used instead of the remaining storage capacity of the ESS **240.** In some examples, both power and energy management are required simultaneously to ensure that all relevant system constraints are met. For example, even if a power limit **204a** is met, it may also be ensured that the remaining storage capacity **245** of the ESS **240** is not exceeded.

With further reference to **FIG. 2****,** in order to manage the excess energy/power **206a, 206b,** the controller **210** is configured to determine a control action **265** to increase energy/power losses of at least one component and/or subsystem **255** of the vehicle **100.** The object with the control action **265** is to increase losses of at least one of the components and/or subsystems **255** by an amount based on to the amount of excess energy/power **206a, 206b** generated by the vehicle **100.** In some examples, the increase of losses corresponds to the excess energy/power **206a, 206b.** In this way, the excess energy/power **206, 206b** is effectively managed without the need of additional hardware or the risk of overcharging the ESS **240,** and the energy/power balance of the vehicle **100** is improved.

The components and/or subsystems **255** at issue may be any components or subsystems controllable to increase energy/power losses. In **FIG. 2****,** the components and/or subsystems **255** are shown as separate from the energy/power consumers **230,** energy/power generators **220** and the ESS **240.** However, the components and/or subsystems **255** controlled to increase losses may include one or more of these systems/components.

For example, the control action **265** may be determined to increase losses of the electrical machines **120.** In this case the control action **265** may comprise modifying a torque or force allocation between the electrical machines **120** such that torque or force is distributed in a non-optimal way whereby energy/power losses are increased in the electrical machines **120** as well as increasing tyre losses such as slip losses.

In some examples, the control action **265** may be determined to increase energy/power losses of the ESS **240.** In this case, the control action **265** may comprise increasing an internal resistance of the ESS **240,** which will cause energy to be dissipated as heat and thereby increases losses of the ESS **240.** This may be achieved by decreasing the temperature of the batteries, which may also result in more cooling power being needed and result in further losses.

In some examples, the control action **265** may be determined to increase energy/power losses of a transmission system. In this case, the control action **265** may comprise selecting a non-optimal gear to increase losses in transmission,

In some examples, the control action **265** may be determined to increase energy/power losses related to a tyre. In this case, the control action **265** may comprise decreasing a tyre pressure to increase a rolling resistance of the vehicle **100.** Tyre losses could also be increased using suspension actuators in the vehicle, for example to provide an uneven load distribution.

In some examples, the control action **265** may be determined to increase energy/power losses of a DC-DC converter. In this case, the control action **265** may comprise changing a switching frequency of the DC-DC converter to reduce its efficiency.

These are some example of potential control actions to increase energy/power losses of the vehicle **100.** However, it will be appreciated by the skilled person that other control actions **265** related to other components and/or subsystems are also possible.

Different components and subsystems may have a different timeframe for increasing energy/power losses. Some components and/or subsystems **255** may provide a quick and efficient increase of losses, while other components and/or subsystems **255** may provide a slow and stable increase of losses. Consequently, the most beneficial control action **265** for a particular scenario will depend on the current situation of the vehicle **100** and a balance between quick dissipation of excess energy/power and stability of the vehicle. Therefore, the controller **210** is configured to acquire the timeframe **260a** for increasing energy/power losses of each of two or more components and/or subsystems **255** of the vehicle **100,** and to determine the control action **265** based on the acquired timeframes **260a.** By taking the timeframes **260a** of the vehicle components and/or subsystems **255** to increase losses into consideration, the controller **210** is enabled to prioritize between different control actions **265** depending on the situation and maintain overall energy efficiency and stability of the vehicle **100.**

In some examples, the timeframe **260a** for increasing energy/power losses is determined based on look-ahead information. The look-ahead information refers to predictive data used to anticipate upcoming driving conditions. This information is typically utilized by advanced vehicle control functions and systems, including predictive cruise control, autonomous path planning, adaptive speed regulation, energy management systems, and collision avoidance and safety systems. The look-ahead information may comprise route characteristics, such as road gradient, slope or curvature, traffic data, such as upcoming speed limits, traffic signals and signs, and traffic conditions, environmental factors such as weather conditions, and the presence of potential obstacles and hazards along the route. The information can be obtained from a combination of onboard vehicle sensors, such as radars, cameras or lidars, along with digital maps, GPS data, V2X (vehicle-to-everything) communication, and/or predictive models. In some cases, the look-ahead information may also comprise predicted target values for specific components and/or subsystems **255** of the vehicle **100,** based on the anticipated driving conditions. By leveraging the look-ahead information, the controller **210** may proactively determine control actions **265** most suited for the road and the conditions ahead.

In some examples, the controller **210** is further configured to acquire a capability **260b** for increasing energy/power losses of each of the at least one component and/or subsystem **255** and to determine the control action **265** based on the acquired capability **260b.** Some components and/or subsystems **255** may have the capability **260b** to provide a large increase of losses, while other components and/or subsystems **255** may only have the capability **260b** to provide a smaller increase of losses. Consequently, the most beneficial control action **265** for a particular scenario will depend on the current situation of the vehicle **100.** By considering the capability **260b** of each component/and or subsystem to increase energy/power losses in addition to the timeframe **260a** discussed above, an effective utilization of the components and/or subsystems **255** is enabled, and an optimized management of excess energy/power is obtained.

In some examples, the controller **210** comprises an optimization unit **215** configured to determine the control action **265** by solving an optimization problem. The optimization problem comprises a cost function or objective function that includes a plurality of terms, wherein each term represents a potential control action **265** for increasing energy/power losses. Each of these terms may further be associated with a corresponding weight that reflects the relative priority, efficiency, cost, or impact of the respective control action **265** under current or anticipated operating conditions. By adjusting these weights, the optimization unit **215** can dynamically balance different objectives. In some examples, the objective comprises reducing the time for increasing losses and/or maintaining vehicle stability. In some examples, the optimization problem is constrained by an upper limit for increasing losses to ensure the energy efficiency of the vehicle **100.** By implementing an optimization unit **215** to determine the control action **265,** the controller **210** is enabled to identify the most effective set of control actions **265** from a range of possibilities, while dynamically adapting to changing conditions. Additionally, it facilitates predictive and proactive control strategies especially when combined with look-ahead information, resulting in improved overall energy efficiency and vehicle performance.

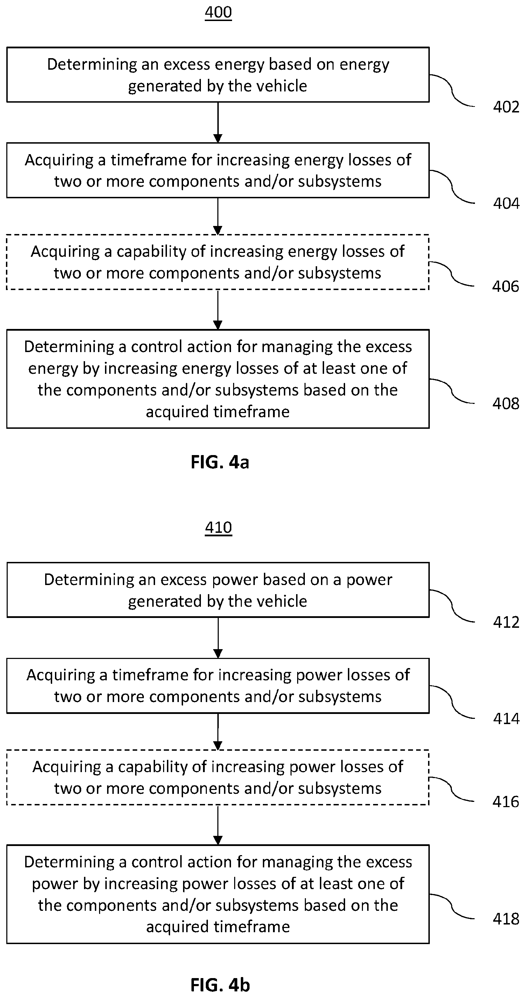

**FIG. 4a** is an exemplary method **400** for managing excess energy **206a** generated by a vehicle **100** according to an example. The method is performed by processing circuitry of a computer system, for example processing circuitry **165** of computer system **160** or **210.**

**At 402,** the amount of excess energy **206a** that needs to be managed is determined. The excess energy **206a** is determined based on an amount of energy generated **225a** by the vehicle **100,** an amount of energy required **235a** by the vehicle **100,** and a remaining storage capacity **245** of the ESS **240** of the vehicle **100.** In some examples, the excess energy **206a** is determined by first determining a residual energy **204a** based on a difference between the amount of energy generated **225a** by the vehicle **100** and the amount of energy required **235a** by the vehicle **100.** Next, a remaining storage capacity **245** of the ESS **240** of the vehicle **100** is acquired, in order to determine how much of the residual energy **204a** may be stored. As discussed in relation to **FIG. 3a****-c,** the amount of residual energy **204a** that may be stored depends on both the remaining storage capacity and on how much of the residual energy **204a** is electrical or mechanical. In some cases, all of the residual energy **204a** may be stored. In some cases, only a part of the residual energy **204a** may be stored, and the rest is excess energy **206a.**

In some examples, the energy generated **225a** by the vehicle **100** is generated by an electric motor **120** operating as a generator during a braking operation and/or a fuel cell system **130.** In some examples, the energy required **235a** by the vehicle **100** comprises energy to fulfil a motion request and/or energy for one or more auxiliary systems **150** of the vehicle **100.** In some examples, the storage capacity **245** of the ESS **240** is determined based on at least one of a temperature, a terminal voltage, and SOC, an SOE, an SOH, and/or a maximum current of the ESS **240.**

At **404,** the processing circuitry **165** acquires a timeframe **260a** for increasing energy losses of two or more components and/or subsystems **255** of the vehicle **100.** Some components and/or subsystems **255** may provide a quick and efficient increase of energy losses, while other components and/or subsystems **255** may provide a slow and stable increase of energy losses. Thus, the timeframe **260a** provides information that facilitates the determination of a control action based on what is required by the current situation.

In some examples, the timeframe **260a** is based on look-ahead information. The look-ahead information is data used to anticipate upcoming driving conditions, and may comprise route data, traffic patterns, driver behaviour profiles, or weather conditions. In this way, the controller **210** may proactively determine a control action **265** most suitable for the road ahead.

In some examples, at **406,** the processing circuitry **165** is further configured to acquire a capability **260b** for increasing energy losses of each of the two or more components and/or subsystems **255** of the vehicle **100.** This information further facilitates prioritization between different control actions **265** depending on the situation.

At **408,** the processing circuitry **165** determines a control action **265** for managing the excess energy **206a** by increasing energy losses of at least one of the two or more components and/or subsystems **255** of the vehicle **100** based on the acquired timeframe **260a.** In this way, the excess energy **206a** can be dissipated as energy losses. By increasing the energy losses of at least one component and/or subsystem **255** by an amount based on the excess energy **206a,** the energy balance in the vehicle **100** is improved, the risk of overcharging the ESS **240** is reduced, and the need for additional hardware to dissipate excess energy is eliminated. In some examples, the control action **265** is further determined based on the acquired capability **260b** for increasing energy losses of each of the at least one component. By determining the control action based on timeframes **260a** and capabilities **260b,** efficient energy management is ensured.

In some examples, the processing circuitry **165** is configured to determine the control action **265** by solving an optimization problem, wherein the optimization problem may be based on an objective such as reducing the time for increasing energy losses and/or maintenance of vehicle stability. In some examples, the objective comprises reducing the time for increasing energy losses and/or maintaining vehicle stability. In some examples, the optimization problem is constrained by an upper limit for increasing energy losses to ensure the energy efficiency of the vehicle **100.** By determining the control action **265** by solving an optimization problem, the controller **210** is enabled to identify the most effective control action **265** from a range of possibilities, while dynamically adapting to changing conditions. Additionally, it facilitates predictive and proactive control strategies, resulting in improved overall energy efficiency and performance of the vehicle **100.**

The method **400** enables excess energy generated by the vehicle to be effectively managed, by determining and prioritizing between different control actions based on timeframes **260a** and capabilities of the vehicle systems and components and objectives of the vehicle. In this way, the energy balance in the vehicle **100** is improved.

**FIG. 4b** is an exemplary method **410** for managing excess power **206b** generated by a vehicle **100** according to an example. The method is performed by processing circuitry of a computer system, for example processing circuitry **165** of computer system **160** or **210.**

At **412,** the amount of excess power **206b** that needs to be managed is determined. The excess power **206b** is determined based on a power generated **225b** by the vehicle **100,** a power required **235b** by the vehicle **100,** and one or more power limits **250** relating to the power that can be sustained during charging or discharging of the ESS **240** of the vehicle **100.** In some examples, the excess power **206b** is determined by first determining a residual power **204b** based on a difference between the power generated **225b** by the vehicle **100** and the power required **235b** by the vehicle **100.** Next, one or more power limits **250** of the ESS **240** of the vehicle **100** is acquired, in order to determine how much of the residual power **204b** may be handled (i.e. stored as energy) by the ESS **240.** As discussed, the amount of residual power **204b** that may be handled depends on the power limits **250** and on how much of the residual power **204b** is electrical or mechanical. In some cases, all of the residual power **204b** may be handled. In some cases, only a part of the residual power **204b** may be handled, and the rest is excess power **206b.**

In some examples, the power generated **225b** by the vehicle **100** is generated by at an electric motor **120** operating as a generator during a braking operation and/or a fuel cell system **130.** In some examples, the power required **235b** by the vehicle **100** comprises power to fulfil a motion request and/or power for one or more auxiliary systems **150** of the vehicle **100.** In some examples, one or more power limits **250** of the ESS **240** are determined based on at least one of a remaining storage capacity **245,** temperature, terminal voltage, SOC, an SOC rate limit, or an SOE rate limit of the ESS **240.**

At **414,** the processing circuitry **165** acquires a timeframe **260a** for increasing power losses of two or more components and/or subsystems **255** of the vehicle **100.** Some components and/or subsystems **255** may provide a quick and efficient increase of power losses, while other components and/or subsystems **255** may provide a slow and stable increase of power losses. Thus, the timeframe **260a** provides information that facilitates the determination of a control action based on what is required by the current situation.

In some examples, the timeframe **260a** is based on look-ahead information. The look-ahead information is data used to anticipate upcoming driving conditions, and may comprise route data, traffic patterns, driver behaviour profiles or weather conditions. In this way, the controller **210** may proactively determine a control action **265** most suitable for the road ahead.

In some examples, at **416,** the processing circuitry **165** is further configured to acquire a capability **260b** for increasing power losses of each of the at least one component. This information further facilitates prioritization between different control actions **265** depending on the situation.

At **418,** the processing circuitry **165** determines a control action **265** for managing the excess power **206** by increasing power losses of at least one of the two or more components and/or subsystems **255** of the vehicle **100** based on the acquired timeframe **260a.** In this way, the excess power **206b** can be dissipated as power losses. By increasing the power losses of at least one component and/or subsystem **255** by an amount based on the excess power **206b,** the power balance in the vehicle **100** is improved, the risk of overcharging the ESS **240** is reduced, and the need for additional hardware to dissipate excess power is eliminated. In some examples, the control action **265** is further determined based on the acquired capability **260b** for increasing power losses of each of the at least one component. By determining the control action based on timeframes **260a** and capabilities **260b,** efficient power management is ensured.

In some examples, the processing circuitry **165** is configured to determine the control action **265** by solving an optimization problem, wherein the optimization problem may be based on an objective such as reducing the time for increasing power losses and/or maintenance of vehicle stability. In some examples, the objective comprises reducing the time for increasing power losses and/or maintaining vehicle stability. In some examples, the optimization problem is constrained by an upper limit for increasing power losses to ensure the energy efficiency of the vehicle **100.** By determining the control action **265** by solving an optimization problem, the controller **210** is enabled to identify the most effective control action **265** from a range of possibilities, while dynamically adapting to changing conditions. Additionally, it facilitates predictive and proactive control strategies, resulting in improved overall energy efficiency and performance of the vehicle **100.**

The method **410** enables excess power generated by the vehicle to be effectively managed, by determining and prioritizing between different control actions based on timeframes **260a** and capabilities of the vehicle systems and components and objectives of the vehicle. In this way, the power balance in the vehicle **100** is improved. In some examples, both power and energy management are required simultaneously to ensure that all relevant system constraints are met. In these examples, the methods **400** and **410** may be performed simultaneously and/or interactively in order to provide the appropriate control.

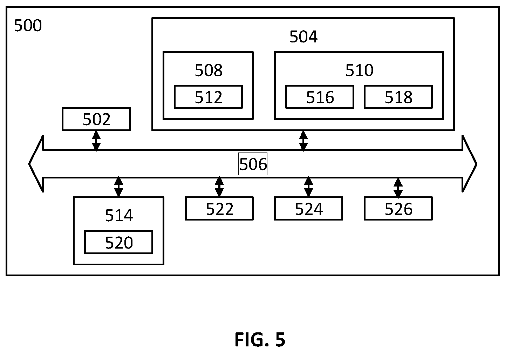

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
**Example 1:** A computer system (160, 210, 500) for managing excess power (206b) generated by a vehicle (100), the computer system (160, 210, 500) comprising processing circuitry (165, 502) configured to: determine an excess power (206b) based on an amount of power (225b) generated by the vehicle (100), a an amount of power (235b) required by the vehicle (100), and a power limit (250) of an energy storage system "EES" (140, 240) of the vehicle (100); acquire a timeframe (260a) for increasing power losses of two or more components and/or subsystems (255) of the vehicle (100); and determine a control action (265) for managing the excess power (206b) by increasing power losses of at least one of the two or more components and/or subsystems (255) based on the acquired timeframe (260a).
**Example 2:** The computer system (160, 210, 500) of example 1, wherein the power required (235b) by the vehicle (100) comprises power to fulfil a motion request and/or power for one or more auxiliary systems of the vehicle (150).
**Example 3:** The computer system (160, 210, 500) of any preceding example, wherein the power limit (245) of the EES (140, 240) is determined based on at least one or more of a remaining storage capacity (245), a state of charge rate limit, or a state of energy rate limit of the EES (140, 240).
**Example 4:** The computer system (160, 210, 500) of any preceding example, wherein the processing circuitry (165, 502) is configured to determine the excess power (206b) by: determining a residual power (204b) based on a difference between the power generated (225b) by the vehicle (100) and the power required (235b) by the vehicle (100); acquiring the power limit (250) of the EES (140, 240) of the vehicle (100); and determining the excess power (206b) based on a difference between the residual power (204b) and the power limit (250).
**Example 5:** A computer system (160, 210, 500) for managing excess energy (206a) generated by a vehicle (100), the computer system (160, 210, 500) comprising processing circuitry (165, 502) configured to: determine an excess energy (206a) based on an amount of energy generated (225a) by the vehicle (100), an amount of energy required (235a) by the vehicle (100), and a remaining storage capacity (245) of an energy storage system "ESS" (140, 240) of the vehicle (100); acquire a timeframe (260a) for increasing energy losses of two or more components and/or subsystems (255) of the vehicle (100); and determine a control action (265) for managing the excess energy (206a) by increasing energy losses of at least one of the two or more components and/or subsystems (255) based on the acquired timeframe (260a).
**Example 6:** The computer system (160, 210, 500) of example 5, wherein the energy required (235a) by the vehicle (100) comprises energy to fulfil a motion request and/or energy for one or more auxiliary systems of the vehicle (150).
**Example 7:** The computer system (160, 210, 500) of example 5 or 6, wherein the storage capacity (245) of the ESS (140, 240) is determined based on one or more of a temperature, a terminal voltage, a state of charge, a state of energy, a state of health, and a maximum current of the ESS (140, 240).
**Example 8:** The computer system (160, 210, 500) of any of examples 5 to 7, wherein the processing circuitry (165, 502) is configured to determine the excess energy (206a) by: determining a residual energy (204a) based on a difference between the energy generated (225a) by the vehicle (100) and the energy required (235a) by the vehicle (100); acquiring the remaining storage capacity (245) of the ESS (140, 240) of the vehicle (100); and determining the excess energy (206a) based on a difference between the residual energy (204) and the remaining storage capacity (245).
**Example 9:** The computer system (160, 210, 500) of any preceding example, wherein one or more of the power (225b) and the energy (225a) generated by the vehicle (100) is generated by one or more of an electric motor (120) operating as a generator during a braking operation and a fuel cell (130).
**Example 10:** The computer system (160, 210, 500) of any preceding example, wherein the timeframe (260a) for increasing losses is determined based on look-ahead information.
**Example 11:** The computer system (160, 210, 500) of any preceding example, wherein the processing circuitry (165, 502) is configured to determine the control action (265) by solving an optimization problem comprising a plurality of terms corresponding to a plurality of control actions and a plurality of weights corresponding to each of the plurality of terms.
**Example 12:** The computer system (160, 210, 500) of example 11, wherein the processing circuitry (165, 502) is configured to solve the optimization problem based on an objective, wherein the objective comprises reducing the time for increasing losses and/or maintenance of vehicle stability.
**Example 13:** The computer system (160, 210, 500) of example 11 or 12, wherein the optimization problem is constrained by an upper limit for increasing power losses.
**Example 14:** The computer system (160, 210, 500) of any preceding example, wherein the processing circuitry (165, 502) is further configured to acquire a capability (260b) for increasing losses of each of the at least one component and/or subsystem, and wherein the control action (265) is further determined based on the acquired capability (260b).
**Example 15:** The computer system (160, 210, 500) of any preceding example, wherein the control action (265) comprises at least one of: modifying a torque or force allocation between electric machines (120) of the vehicle (100) to increase power losses, selecting a gear to increase losses in transmission, decreasing tyre pressure to increase a rolling resistance of the vehicle (100), increasing an internal resistance of the electrical power storage system (140, 240), and/or changing a switching frequency of a DC-DC converter to reduce the efficiency of the DC-DC converter.
**Example 16:** A vehicle (100) comprising the computer system (160, 210, 500) of any preceding example.
**Example 17:** A computer-implemented method (410) for managing excess power (206b) generated by a vehicle (100), the computer-implemented method (410) comprising: determining (412), by processing circuitry (165, 502) of a computer system, an excess power (206b) based on an amount of power generated (225b) by the vehicle (100), an amount of power required (235b) by the vehicle (100), and a power limit (250) of an energy storage system "EES" (140, 240) of the vehicle (100); acquiring (404), by the processing circuitry (165, 502), a timeframe (260a) for increasing power losses of two or more components and/or subsystems (255) of the vehicle (100); and determining (408), by the processing circuitry (165, 502), a control action (265) for managing the excess power (206b) by increasing power losses of at least one of the two or more components and/or subsystems (255) of the vehicle (100) based on the acquired timeframe (260a).
**Example 18:** The computer-implemented method (410) of example 17, wherein the power required (235b) by the vehicle (100) comprises power to fulfil a motion request and/or power for one or more auxiliary systems of the vehicle (150).
**Example 19:** The computer-implemented method (410) of example 17 to 18, wherein the processing circuitry (165, 502) is configured to determine the power limit (245) of the EES (140, 240) based on one or more of a remaining storage capacity (245), a state of charge rate limit, or a state of energy rate limit of the EES (140, 240).
**Example 20:** The computer-implemented method (410) of example 17 to 19, wherein the processing circuitry (165, 502) is configured to determine the excess power (206b) by: determining a residual power (204b) based on a difference between the power generated (225b) by the vehicle (100) and the power required (235b) by the vehicle (100); acquiring the power limit (245) of the EES (140, 240) of the vehicle (100); and determining the excess power (206b) based on a difference between the residual power (204b) and the power limit (250).
**Example 21:** A computer-implemented method (400) for managing excess energy (206a) generated by a vehicle (100), the computer-implemented method (400) comprising: determining (402), by processing circuitry (165, 502) of a computer system, an excess energy (206a) based on an amount of energy generated (225a) by the vehicle (100), an amount of energy required (235a) by the vehicle (100), and a remaining storage capacity (245) of an energy storage system (140, 240) of the vehicle (100); acquiring (404), by the processing circuitry (165, 502), a timeframe (260a) for increasing energy losses of two or more components and/or subsystems (255) of the vehicle (100); and determining (408), by the processing circuitry (165, 502), a control action (265) for managing the excess energy (206a) by increasing energy losses of at least one of the two or more components and/or subsystems (255) of the vehicle (100) based on the acquired timeframe (260a).
**Example 22:** The computer-implemented method (400) of example 21, wherein the energy required (235a) by the vehicle (100) comprises energy to fulfil a motion request and/or energy for one or more auxiliary systems of the vehicle (150).
**Example 23:** The computer-implemented method (400) of example 21 or 22, wherein the processing circuitry (165, 502) is configured to determine the storage capacity (245) of the ESS (140, 240) based on one or more of a temperature, a terminal voltage, a state of charge, a state of energy, a state of health, and a maximum current of the ESS (140, 240).
**Example 24:** The computer-implemented method (400) of example 21 to 23, wherein the processing circuitry (165, 502) is configured to determine the excess energy (206a) by: determining a residual energy (204a) based on a difference between the energy generated (225a) by the vehicle (100) and the energy required (235a) by the vehicle (100); acquire the remaining storage capacity (245) of the ESS (140, 240) of the vehicle (100); and determine the excess energy (206a) based on a difference between the residual energy (204a ) and the remaining storage capacity (245).
**Example 25:** The computer-implemented method (400, 410) of example 17 to 24, wherein one or more of the power (225b) and the energy generated (225a) by the vehicle (100) is generated by one or more of an electric motor (120) operating as a generator during a braking operation and a fuel cell (130).
**Example 26:** The computer-implemented method (400, 410) of example 17 to 25, wherein the processing circuitry (165, 502) is configured to determine the timeframe (260a) for increasing losses based on look-ahead information.
**Example 27:** The computer-implemented method (400, 410) of example 17 to 26, wherein the processing circuitry (165, 502) is configured to determine the control action (265) by solving an optimization problem comprising a plurality of terms corresponding to a plurality of control actions and a plurality of weights corresponding to each of the plurality of terms.
**Example 28:** The computer-implemented method (400, 410) of example 27, wherein the processing circuitry (165, 502) is configured to solve the optimization problem based on an objective, wherein the objective comprises reducing the time for increasing losses and/or maintenance of vehicle stability.
**Example 29:** The computer-implemented method (400, 410) of example 27 or 28, wherein the optimization problem is constrained by an upper limit for increasing losses.
**Example 30:** The computer-implemented method (400) of example 17 to 29, wherein the processing circuitry (165, 502) is configured to acquire a capability (260b) for increasing losses of each of the at least one component and/or subsystem, and wherein the processing circuitry (165, 502) is further configured to determine the control action (265) based on the acquired capability (260b).
**Example 31:** The computer-implemented method (400, 410) of example 17 to 30, wherein the control action (265) comprises at least one of: modifying a torque or force allocation between electric machines (120) of the vehicle (100) to increase losses, selecting a gear to increase losses in transmission, decreasing tyre pressure to increase a rolling resistance of the vehicle (100), increasing an internal resistance of the electrical power storage system (140, 240), and/or changing a switching frequency of a DC-DC converter to reduce the efficiency of the DC-DC converter.
**Example 32:** A computer program product comprising program code for performing, when executed by processing circuitry (165, 502), the computer-implemented method (400, 410) of any of examples 17 to 31.
**Example 33:** A non-transitory computer-readable storage medium comprising instructions, which when executed by processing circuitry (165, 502), cause the processing circuitry (165, 502) to perform the computer-implemented method (400, 410) of any of examples 17 to 31.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (160, 210, 500) for managing excess power (206b) generated by a vehicle (100), the computer system (160, 210, 500) comprising processing circuitry (165, 502) configured to:
determine an excess power (206b) based on an amount of power (225b) generated by the vehicle (100), an amount of power (235b) required by the vehicle (100), and a power limit (250) of an energy storage system "ESS" (140, 240) of the vehicle (100);
acquire a timeframe (260a) for increasing power losses of two or more components and/or subsystems (255) of the vehicle (100); and
determine a control action (265) for managing the excess power (206b) by increasing power losses of at least one of the two or more components and/or subsystems (255) based on the acquired timeframe (260a).

2. The computer system (160, 210, 500) of any preceding claim, wherein the processing circuitry (165, 502) is configured to determine the excess power (206b) by:
determining a residual power (204b) based on a difference between the power generated (225b) by the vehicle (100) and the power required (235b) by the vehicle (100);
acquiring the power limit (250) of the ESS (140, 240) of the vehicle (100); and
determining the excess power (206b) based on a difference between the residual power (204b) and the power limit (250).

3. A computer system (160, 210, 500) for managing excess energy (206a) generated by a vehicle (100), the computer system (160, 210, 500) comprising processing circuitry (165, 502) configured to:
determine an excess energy (206a) based on an amount of energy generated (225a) by the vehicle (100), an amount of energy required (235a) by the vehicle (100), and a remaining storage capacity (245) of an energy storage system "ESS" (140, 240) of the vehicle (100);
acquire a timeframe (260a) for increasing energy losses of two or more components and/or subsystems (255) of the vehicle (100); and
determine a control action (265) for managing the excess energy (206a) by increasing energy losses of at least one of the two or more components and/or subsystems (255) based on the acquired timeframe (260a).

4. The computer system (160, 210, 500) of claim 3, wherein the processing circuitry (165, 502) is configured to determine the excess energy (206a) by:
determining a residual energy (204a) based on a difference between the energy generated (225a) by the vehicle (100) and the energy required (235a) by the vehicle (100);
acquiring the remaining storage capacity (245) of the ESS (140, 240) of the vehicle (100); and
determining the excess energy (206a) based on a difference between the residual energy (204a) and the remaining storage capacity (245).

5. The computer system (160, 210, 500) of any preceding claim, wherein one or more of the power (225b) and the energy generated (225a) by the vehicle (100) is generated by one or more of an electric motor (120) operating as a generator during a braking operation and a fuel cell (130).

6. The computer system (160, 210, 500) of any preceding claim, wherein the timeframe (260a) for increasing losses is determined based on look-ahead information.

7. The computer system (160, 210, 500) of any preceding claim, wherein the processing circuitry (165, 502) is configured to determine the control action (265) by solving an optimization problem comprising a plurality of terms corresponding to a plurality of control actions and a plurality of weights corresponding to each of the plurality of terms.

8. The computer system (160, 210, 500) of claim 7, wherein the processing circuitry (165, 502) is configured to solve the optimization problem based on an objective, wherein the objective comprises reducing the time for increasing losses and/or maintenance of vehicle stability.

9. The computer system (160, 210, 500) of any preceding claim, wherein the processing circuitry (165, 502) is further configured to acquire a capability (260b) for increasing losses of each of the at least one component and/or subsystem, and wherein the control action (265) is further determined based on the acquired capability (260b).

10. The computer system (160, 210, 500) of any preceding claim, wherein the control action (265) comprises at least one of:
modifying a torque or force allocation between electric machines (120) of the vehicle (100) to increase losses,
selecting a gear to increase losses in transmission,
decreasing tyre pressure to increase a rolling resistance of the vehicle (100),
increasing an internal resistance of the ESS (140, 240), and/or
changing a switching frequency of a DC-DC converter to reduce the efficiency of the DC-DC converter.

11. A vehicle (100) comprising the computer system (160, 210, 500) of any preceding claim.

12. A computer-implemented method (410) for managing excess power (206b) generated by a vehicle (100), the computer-implemented method (400) comprising:
determining (412), by processing circuitry (165, 502) of a computer system, an excess power (206b) based on an amount of power generated (225b) by the vehicle (100), an amount of power required (235) by the vehicle (100), and a power limit (250) of an energy storage system (140, 240) of the vehicle (100);
acquiring (414), by the processing circuitry (165, 502), a timeframe (260a) for increasing power losses of two or more components and/or subsystems (255) of the vehicle (100); and
determining (418), by the processing circuitry (165, 502), a control action (265) for managing the excess power (206b) by increasing power losses of at least one of the two or more components and/or subsystems (255) of the vehicle (100) based on the acquired timeframe (260a).

13. A computer-implemented method (400) for managing excess energy (206a) generated by a vehicle (100), the computer-implemented method (400) comprising:
determining (402), by processing circuitry (165, 502) of a computer system, an excess energy (206a) based on an amount of energy generated (225a) by the vehicle (100), an amount of energy required (235a) by the vehicle (100), and a remaining storage capacity (245) of an energy storage system (140, 240) of the vehicle (100);
acquiring (404), by the processing circuitry (165, 502), a timeframe (260a) for increasing energy losses of two or more components and/or subsystems (255) of the vehicle (100); and
determining (408), by the processing circuitry (165, 502), a control action (265) for managing the excess energy (206a) by increasing energy losses of at least one of the two or more components and/or subsystems (255) of the vehicle (100) based on the acquired timeframe (260a).

14. A computer program product comprising program code for performing, when executed by processing circuitry (165, 502), the computer-implemented method (400) of claim 12 or 13.

15. A non-transitory computer-readable storage medium comprising instructions, which when executed by processing circuitry (165, 502), cause the processing circuitry (165, 502) to perform the computer-implemented method (400) of claim 12 or 13.

## Amended claims

### Amended claims in accordance with Rule 137(2) EPC.

1. A computer system (160, 210, 500) for managing excess power (206b) generated by a vehicle (100), the computer system (160, 210, 500) comprising processing circuitry (165, 502) configured to:
determine an excess power (206b) based on an amount of power (225b) generated by the vehicle (100), an amount of power (235b) required by the vehicle (100), and a power limit (250) of an energy storage system "ESS" (140, 240) of the vehicle (100);
acquire a timeframe (260a) for increasing power losses of two or more components and/or subsystems (255) of the vehicle (100); and
determine a control action (265) for managing the excess power (206b) by increasing power losses of at least one of the two or more components and/or subsystems (255) based on the acquired timeframe (260a).

2. The computer system (160, 210, 500) of any preceding claim, wherein the processing circuitry (165, 502) is configured to determine the excess power (206b) by:
determining a residual power (204b) based on a difference between the power generated (225b) by the vehicle (100) and the power required (235b) by the vehicle (100);
acquiring the power limit (250) of the ESS (140, 240) of the vehicle (100); and
determining the excess power (206b) based on a difference between the residual power (204b) and the power limit (250).

3. A computer system (160, 210, 500) for managing excess energy (206a) generated by a vehicle (100), the computer system (160, 210, 500) comprising processing circuitry (165, 502) configured to:
determine an excess energy (206a) based on an amount of energy generated (225a) by the vehicle (100), an amount of energy required (235a) by the vehicle (100), and a remaining storage capacity (245) of an energy storage system "ESS" (140, 240) of the vehicle (100);
acquire a timeframe (260a) for increasing energy losses of two or more components and/or subsystems (255) of the vehicle (100); and
determine a control action (265) for managing the excess energy (206a) by increasing energy losses of at least one of the two or more components and/or subsystems (255) based on the acquired timeframe (260a).

4. The computer system (160, 210, 500) of claim 3, wherein the processing circuitry (165, 502) is configured to determine the excess energy (206a) by:
determining a residual energy (204a) based on a difference between the energy generated (225a) by the vehicle (100) and the energy required (235a) by the vehicle (100);
acquiring the remaining storage capacity (245) of the ESS (140, 240) of the vehicle (100); and
determining the excess energy (206a) based on a difference between the residual energy (204a) and the remaining storage capacity (245).

5. The computer system (160, 210, 500) of any preceding claim, wherein one or more of the power (225b) and the energy generated (225a) by the vehicle (100) is generated by one or more of an electric motor (120) operating as a generator during a braking operation and a fuel cell (130).

6. The computer system (160, 210, 500) of any preceding claim, wherein the timeframe (260a) for increasing losses is determined based on look-ahead information.

7. The computer system (160, 210, 500) of any preceding claim, wherein the processing circuitry (165, 502) is configured to determine the control action (265) by solving an optimization problem comprising a plurality of terms corresponding to a plurality of control actions and a plurality of weights corresponding to each of the plurality of terms.

8. The computer system (160, 210, 500) of claim 7, wherein the processing circuitry (165, 502) is configured to solve the optimization problem based on an objective, wherein the objective comprises reducing the time for increasing losses.

9. The computer system (160, 210, 500) of any preceding claim, wherein the processing circuitry (165, 502) is further configured to acquire a capability (260b) for increasing losses of each of the at least one component and/or subsystem, and wherein the control action (265) is further determined based on the acquired capability (260b).

10. The computer system (160, 210, 500) of any preceding claim, wherein the control action (265) comprises at least one of:
modifying a torque or force allocation between electric machines (120) of the vehicle (100) to increase losses,
selecting a gear to increase losses in transmission,
decreasing tyre pressure to increase a rolling resistance of the vehicle (100),
increasing an internal resistance of the ESS (140, 240), and/or
changing a switching frequency of a DC-DC converter to reduce the efficiency of the DC-DC converter.

11. A vehicle (100) comprising the computer system (160, 210, 500) of any preceding claim.

12. A computer-implemented method (410) for managing excess power (206b) generated by a vehicle (100), the computer-implemented method (400) comprising:
determining (412), by processing circuitry (165, 502) of a computer system, an excess power (206b) based on an amount of power generated (225b) by the vehicle (100), an amount of power required (235) by the vehicle (100), and a power limit (250) of an energy storage system (140, 240) of the vehicle (100);
acquiring (414), by the processing circuitry (165, 502), a timeframe (260a) for increasing power losses of two or more components and/or subsystems (255) of the vehicle (100); and
determining (418), by the processing circuitry (165, 502), a control action (265) for managing the excess power (206b) by increasing power losses of at least one of the two or more components and/or subsystems (255) of the vehicle (100) based on the acquired timeframe (260a).

13. A computer-implemented method (400) for managing excess energy (206a) generated by a vehicle (100), the computer-implemented method (400) comprising:
determining (402), by processing circuitry (165, 502) of a computer system, an excess energy (206a) based on an amount of energy generated (225a) by the vehicle (100), an amount of energy required (235a) by the vehicle (100), and a remaining storage capacity (245) of an energy storage system (140, 240) of the vehicle (100);
acquiring (404), by the processing circuitry (165, 502), a timeframe (260a) for increasing energy losses of two or more components and/or subsystems (255) of the vehicle (100); and
determining (408), by the processing circuitry (165, 502), a control action (265) for managing the excess energy (206a) by increasing energy losses of at least one of the two or more components and/or subsystems (255) of the vehicle (100) based on the acquired timeframe (260a).

14. A computer program product comprising program code for performing, when executed by processing circuitry (165, 502), the computer-implemented method (400) of claim 12 or 13.

15. A non-transitory computer-readable storage medium comprising instructions, which when executed by processing circuitry (165, 502), cause the processing circuitry (165, 502) to perform the computer-implemented method (400) of claim 12 or 13.
